# EUROPÄISCHE PATENTSCHRIFT

(11) **EP 3 734 164 B1**
(45) Veröffentlichungstag und Bekanntmachung des Hinweises auf die Patenterteilung: **19.08.2026**
(21) Anmeldenummer: 20170742.9
(22) Anmeldetag: 21.04.2020
(51) Int. Cl.: F24C 7/06, F24C 7/00, F24H 3/00, F24H 9/18, F24D 13/04, F24H 9/1863, H05B 3/24

(54) **ELEKTRISCHER HEIZKÖRPER**
ELECTRIC RADIATOR
RADIATEUR ÉLECTRIQUE

(30) Priorität: 24.04.2019 DE 102019110622
(43) Veröffentlichungstag der Anmeldung: 04.11.2020
(73) Patentinhaber: Vasco Group nv, 3650 Dilsen (BE)
(72) Erfinder: MORGANTI, Nadir, 3650 Lanklaar (BE); DIEPVINTS, Jef, 3550 Zolder (BE); POPOWICZ, Jimmy, 3665 As (BE)
(74) Vertreter: Patentanwälte Bressel und Partner mbB

(56) Entgegenhaltungen:
- EP-A1- 1 584 873
- EP-A1- 2 251 612
- EP-B1- 1 584 873
- DE-A1- 102005 002 840
- DE-A1- 102008 043 893
- DE-A1- 2 738 036

## Beschreibung

Die vorliegende Erfindung betrifft einen elektrischen Heizkörper nach dem Oberbegriff von Anspruch 1. Der Heizkörper dient zum Beheizen von Räumen oder Teilen von Räumen in einem Gebäude und kann insbesondere als Designheizkörper oder als Radiator ausgebildet sein.

Derartige Heizkörper sind allgemein bekannt. Sie können als rein elektrisch betriebene Heizkörper, denen ausschließlich elektrische Energie zugeführt und mittels eines elektrischen Heizwiderstands in Wärme umgewandelt wird, oder als kombinierte Heizkörper, die einerseits an eine Zentralheizungsanlage angeschlossen sind und von einem durch diese erwärmten Heizmedium durchströmt werden, sowie andererseits noch ein zusätzliches elektrisches Heizelement zum Umwandeln elektrischer Energie in Wärme aufweisen, ausgeführt sein. Bei kombinierten Heizkörpern wird das elektrische Heizelement üblicherweise als Zusatzheizung für den Heizkörper verwendet, welches insbesondere in der Übergangszeit von Frühling oder Herbst eine elektrische Beheizung ermöglicht, wenn die Zentralheizungsanlage schon oder noch ausgeschaltet ist.

Ein kombinierter Heizkörper mit Vorlauf- und Rücklaufanschlüssen für ein zirkulierendes Heizmedium, bei dem in einem Verteilerrohr oder Sammelrohr des Heizkörpers ein elektrischer Heizstab angeordnet ist, ist beispielsweise aus der DE 20 2006 007 968 U1 bekannt. Das elektrische Heizelement kommt dabei also in unmittelbaren Kontakt mit dem zirkulierenden Heizmedium.

Aus der DE 299 18 763 U1 ist ein kombinierter Heizkörper bekannt, bei dem ein elektrische Heizelement an einer Außenseite des Heizkörpers angebracht ist. Aufgrund der außenseitigen Anbringung des elektrischen Heizelements werden hierbei Abdichtungsprobleme bei der Durchführung der Kabel für das elektrische Heizelement vermieden.

Aus der EP 1 584 873 A1 ist ein Heizsystem bekannt, bei dem ein elektrisch betreibbares Flächenheizelement an einem insbesondere von einem Heizmedium durchströmbaren Heizkörper angebracht ist. Dabei wird das elektrisch betreibbare Flächenheizelement über eine Schutzabdeckung sowie über eine Gehäuseabdeckung und Haltelemente an der Rückseite des gewölbt ausgebildeten Heizkörpers angebracht.

Auch aus der DE 10 2005 002 840 A1 ist kombinierter Heizkörper bekannt, der zumindest teilweise mit einem Heizmedium gefüllt oder von einem Heizmedium durchströmbar ist, und an dem ein elektrisches Heizelement außenseitig angebracht ist. Dabei kann die Anbringung des elektrischen Heizelements entweder stoffschlüssig, insbesondere durch Kleben, oder kraftschlüssig über Klemmmittel ausgeführt sein.

Aus der DE 10 2008 043 893 A1 ist eine elektrische Heizvorrichtung bekannt, bei der mehrere elektrische Heizelemente zusammen mit einem isolierenden Harzhalterungsbauteil, mehreren Elektrodenplatten, mehreren Wärmeabstrahlungsrippen sowie einem oberen und einem unteren Rahmen zu einem Heizstapelkörper übereinander gestapelt sind. Dabei werden die Bestandteile des Heizstapelkörpers durch zwei Druckfedern, die beiderseits von außen auf den Heizstapelkörper aufgesteckt werden, zusammengehalten.

Aus der DE 27 38 036 A1 ist ein Heizelement für eine Raumheizung bekannt, das mindestens zwei in gegenseitigem Abstand parallel zueinander angeordnete plattenförmige Hohlkörper aufweist, die einen Aufnahmeraum zur Aufnahme einer Wärmeträgerflüssigkeit bilden, wobei an seiner Unterseite mindestens ein elektrisch beheizbarer Heizstab in einer Heizstabkammer verläuft, die auf ihrer Außenseite von der Wärmeträgerflüssigkeit umgeben ist, während ihr Inneres von dem Aufnahmeraum für die Wärmeträgerflüssigkeit getrennt ist.

Aus der EP 2 251 612 A1 ist ein elektrischer Heizkörper bekannt, bei dem eine Wärmeübertragungsflüssigkeit von einem elektrischen Heizwiderstand erwärmt wird, der in einem beidseitig geschlossenen Rohr angeordnet ist.

Eine durch Kleben ausgeführte Anbringung kann bei höheren Temperaturen oder bei bestimmten Oberflächen, etwa bei lackierten Basiskörpern problematisch sein. Insbesondere kann die Haltekraft der Klebverbindung mit der Zeit nachlassen. Auch geht eine Trennung des elektrischen Heizwiderstands vom Basiskörper, etwa bei einer Reparatur oder am Lebensende des Heizkörpers, bei einer Klebverbindung mit einem erheblichen Arbeitsaufwand einher.

Diese Probleme treten bei einer kraftschlüssigen Befestigung des elektrischen Heizwiderstands nicht auf. Die Anbringung des elektrischen Heizwiderstands am Basiskörper über Klemmkörper erlaubt eine lange Haltbarkeit sowie eine besonders einfache Montage und Demontage.

Aufgabe der vorliegenden Erfindung ist es daher, einen elektrischen Heizkörper mit einer verbesserten kraftschlüssigen Anbringung des elektrischen Heizwiderstands am Basiskörper bereitzustellen.

Diese Aufgabe wird erfindungsgemäß durch einen elektrischen Heizkörper nach Anspruch 1 gelöst. Vorteilhafte Ausgestaltungen und zweckmäßige Weiterbildungen der Erfindung ergeben sich aus den abhängigen Ansprüchen, der Beschreibung oder den Figuren.

Bei einem elektrischen Heizkörper für die Beheizung von Räumen, bei dem mindestens ein Klemmkörper einen elektrischen Heizwiderstand kraftschlüssig gegen einen Basiskörper andrückt, ist erfindungsgemäß ein elektrischer Heizkörper nach Anspruch 1 vorgesehen.

Nach einer bevorzugten Ausführungsform ist vorgesehen, dass die Anlagefläche des Basiskörpers (20) und/oder des Klemmkörpers (60) konvex gewölbt ist und dass der Klemmkörper (60) einen in Querrichtung federelastisch biegbaren Drucksteg (62) aufweist, der eine Andrückfläche umfasst, die an dem elektrischen Heizwiderstand (40) anliegt, wobei der Klemmkörper (60) entsprechend der konvexen Oberfläche der Anlagefläche gewölbt ist.

Mit anderen Worten ausgedrückt bedeutet das, dass der elektrische Heizwiderstand in Anlage an mindestens einer konvexen Anlagefläche des Basiskörpers ist.

Ein wesentlicher Vorteil liegt bei der erfindungsgemäßen Ausführung darin, dass der elektrische Heizwiderstand, der lediglich einen Teilbereich der Oberfläche des Basiskörpers bedeckt und daher eine sehr hohe Heizleistungsdichte aufweist, optimal an der Anlagefläche des Basiskörpers anliegt und vorteilhafterweise über seine gesamte Erstreckung sicher daran angedrückt gehalten wird.

Ein weiterer wesentlicher Vorteil besteht darin, dass auch der Klemmkörper optimal an der von dem Basiskörper abgewandten Rückseite des elektrischen Heizwiderstands anliegt, so dass bei einem gut wärmeleitenden Material des Klemmkörpers Wärme auch von der Rückseite des elektrischen Heizwiderstands optimal abgeführt und vorteilhafterweise an den Basiskörper übertragen werden kann.

Vorteilhafterweise wird der elektrische Heizwiderstand (40) im Wesentlichen durch den Klemmkörper (60) an dem Basiskörper (20) des Heizkörpers gehalten, so dass keine weiteren Befestigungsmittel erforderlich sind.

Besonders vorteilhaft ist es, wenn der Klemmkörper seinerseits formschlüssig und kraftschlüssig an dem Basiskörper gehalten ist. Dadurch wird eine besonders einfache und schnell ausführbare Montage gewährleistet.

Gemäß einer besonders bevorzugten Ausführungsform wird vorgeschlagen, dass ein erster Bereich des Klemmkörpers einen ersten Vorsprung, den der Basiskörper aufweist, hintergreift. Vorzugsweise liegt der Klemmkörper dabei mit dem seitlich über die Anlagefläche hinausragenden ersten Bereich in einer zumindest annähernd senkrecht zu der Anlagefläche verlaufenden Richtung an dem ersten Vorsprung an. Auf diese Weise kann der Klemmkörper besonders einfach am Basiskörper gehalten werden.

Besonders vorteilhaft ist es dabei ferner, wenn außerdem ein zweiter Bereich des Klemmkörpers einen zweiten Vorsprung, den der Basiskörper zusätzlich aufweist, ebenfalls hintergreift. Vorzugsweise liegt der Klemmkörper auch dabei mit dem seitlich über die Anlagefläche hinausragenden zweiten Bereich in einer zumindest annähernd senkrecht zu der Anlagefläche verlaufenden Richtung an dem zweiten Vorsprung an. Vorteilhafterweise befindet sich der zweite Vorsprung des Klemmkörpers bezüglich der Anlagefläche für den elektrischen Heizwiderstand auf der dem ersten Vorsprung gegenüberliegenden Seite. Durch zwei von unterschiedlichen Bereichen des Klemmkörpers hintergriffene Vorsprünge des Basiskörpers kann unter elastischer Verformung des Klemmkörpers eine besonders einfach herzustellende und gleichzeitig besonders sichere kraftschlüssige Befestigung des Klemmkörpers am Basiskörper erreicht werden.

Vorzugsweise können der erste Vorsprung und/oder der zweite Vorsprung jeweils durch eine sich in Längsrichtung erstreckende Rippe des Basiskörpers gebildet sein, die seitlich in Richtung zur Anlagefläche vorsteht.

Besonders günstig ist es dabei, wenn der Basiskörper einen dritten Vorsprung oder einen Anlagebereich aufweist, gegen den der Klemmkörper in einer zumindest annähernd parallel oder tangential zu der Anlagefläche verlaufenden Richtung anliegt, während er den ersten und den zweiten Vorsprung hintergreift. Hierdurch kann ein unbeabsichtigtes seitliches Verschieben des Klemmkörpers verhindert werden, so dass das Hintergreifen der beiden Vorsprünge und somit die kraftschlüssige Befestigung zuverlässig gesichert ist. Besonders vorteilhaft ist es, wenn der Basiskörper mindestens eine mit einem Fluid gefüllte Kammer und/oder mindestens einen von einem Heizfluid durchströmbaren Kanal, der mit einem Vorlaufanschluss und einem Rücklaufanschluss des Heizkörpers verbunden ist, aufweist.

Nach einer weiteren besonders bevorzugten Ausführungsform ist vorgesehen, dass der Basiskörper ein metallischer Profilkörper ist. In einem vorteilhafterweise längsgestreckten Profilkörper können Vorsprünge zur Anbringung des Klemmkörpers besonders einfach ausgeformt werden.

Vorzugsweise besteht der Basiskörper dabei aus einem extrudierten Aluminiumprofil, was sich bei geringem Gewicht durch eine gute Wärmeleitfähigkeit auszeichnet.

Gemäß einer weiteren besonders bevorzugten Ausführungsform wird vorgeschlagen, dass der Klemmkörper durch ein Blech, insbesondere durch ein elastisches Aluminiumblech gebildet ist. Auf diese Weise kann der Klemmkörper gut die für die Aufbringung der Klemmkraft erforderlichen federnden Eigenschaften (Elastizität) aufweisen. Außerdem kann über ein gut wärmeleitendes Blech wie Aluminium besonders gut auch die an der Rückseite des elektrischen Heizwiderstands austretende Wärme aufgenommen und an den Basiskörper geleitet werden, so dass der elektrische Heizwiderstand durch den Klemmkörper quasi gekühlt wird.

Vorzugsweise ist der Klemmkörper dabei durch einen längsgestreckten elastischen Blechstreifen oder ein längsgestrecktes elastisches Blechprofil gebildet.

Gemäß einer besonders bevorzugten Ausführungsform weist der Klemmkörper mindestens einen vom Drucksteg abgewinkelten Haltesteg auf. Der Drucksteg kann dabei die für das Andrücken des Heizwiderstands erforderliche Elastizität aufweisen und vorzugsweise konvex gewölbt ausgeführt sein. Auf diese Weise kann der Haltesteg, insbesondere eine freie Kante des Haltestegs einen ersten Bereich ausbilden, der einen ersten Vorsprung des Basiskörpers hintergreift, während der Drucksteg, insbesondere eine freie Kante des Druckstegs einen zweiten Bereich ausbildet, der einen zweiten Vorsprung des Basiskörpers hintergreift. Vorteilhafterweise kann der Haltesteg dabei gegen einen dritten Vorsprung oder einen Anlagebereich des Basiskörpers zur Anlage kommen, so dass der Klemmkörper gegen eine unbeabsichtigte seitliche Verlagerung gesichert und dadurch auch das Hintergreifen der beiden Vorsprünge des Basiskörpers durch den Haltesteg und den Drucksteg zuverlässig gewährleistet ist.

Besonders vorteilhaft ist es dabei für die Elastizität des die Andrückfläche ausbildenden Druckstegs, wenn die Höhe des mindestens einen Haltestegs geringer ist als die Breite des Druckstegs. Vorzugsweise ist der Haltesteg von dem Drucksteg in einem Winkel von 90° abgewinkelt.

Gemäß einer ersten bevorzugten Ausführungsform weist der Haltesteg mindestens einen Querschlitz auf, der den Haltesteg in mindestens zwei Halteklappen unterteilt. Dabei verläuft der Querschlitz vorteilhafterweise quer zur Längserstreckung des Blechprofils. Auf diese Weise können die Halteklappen des Haltestegs besonders leicht hinter einen Vorsprung des Basiskörpers gebracht werden.

Gemäß einer zweiten bevorzugten Ausführungsform weist der Haltesteg eine Vielzahl von Querschlitzen auf, die den Haltesteg in eine dementsprechende Vielzahl von Haltezinken unterteilen. Hierdurch können die einzelnen Haltezinken noch leichter hinter einen Vorsprung des Basiskörpers gebracht werden. Vorzugsweise ist nur ein einziger Klemmkörper vorgesehen. Alternativ können aber auch zwei oder mehr Klemmkörper zum Andrücken des elektrischen Heizwiderstands gegen den Basiskörper angeordnet sein.

Besonders vorteilhaft ist es dabei, wenn der flexible elektrische Heizwiderstand aus einem elastischen, also leicht mechanisch verformbaren Material besteht. Dadurch wird beim Andrücken durch den Klemmkörper eine optimale und vollflächige Anlage des Heizwiderstands an der Anlagefläche des Basiskörpers ermöglicht.

Besonders vorteilhaft ist es ferner, wenn der Heizwiderstand von einem Kunststoffmantel umgeben ist. Insbesondere dann, wenn der Heizwiderstand leicht mechanisch verformbar ausgeführt ist, besteht auch die Umhüllung vorteilhafterweise aus einem elastischen, also leicht biegsamen bzw. verformbaren Kunststoff.

Vorteilhafterweise ist der elektrische Heizwiderstand ein PTC-Heizelement. PTC- Heizelemente regeln als selbstregelnde dynamische Heizelemente bei Erreichen einer bestimmten Grenztemperatur durch Ansteigen ihres Widerstandes ihre Leistung selbstständig ab, weswegen sie besonders gut für Heizanwendungen verwendet werden können.

Weitere Vorteile und Merkmale der Erfindung ergeben sich aus der nachfolgenden Beschreibung zu den in den Zeichnungen dargestellten Ausführungsbeispielen.

Es zeigen:
- Figur 1:: perspektivische Explosionsdarstellung der Bestandteile eines erfindungsgemäßen elektrischen Heizkörpers, und
- Figur 2:: Querschnitt durch den Heizkörper aus Figur 1 im fertig montiertem Zustand.

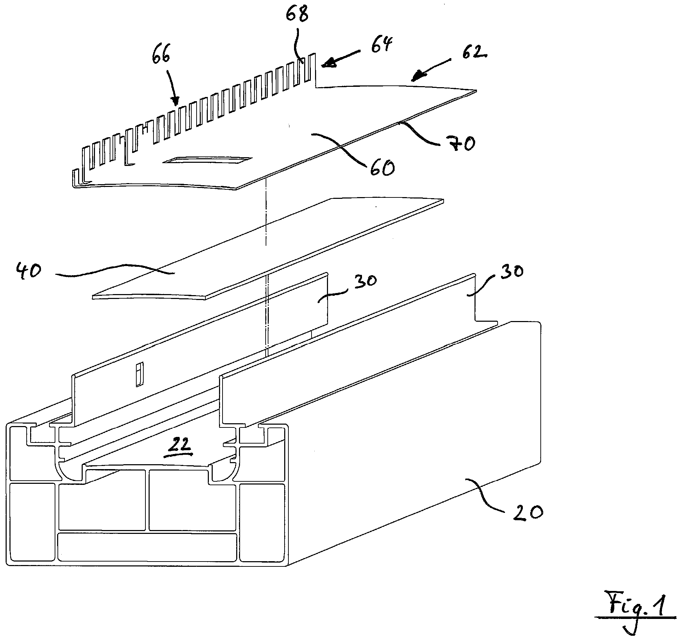

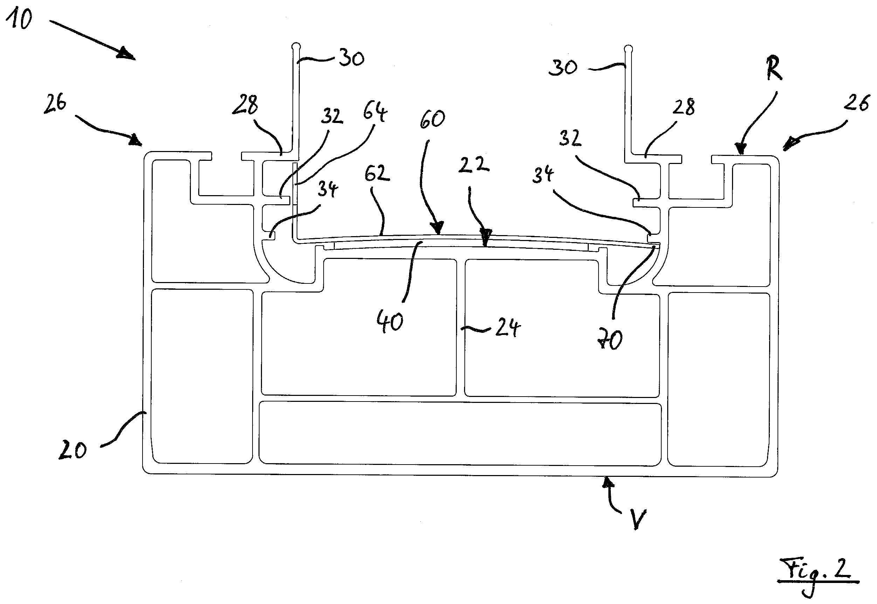

Die Figuren 1 und 2 zeigen einen elektrischen Heizkörper 10, der dazu vorgesehen ist, als Radiator in einem Gebäude zum Beheizen eines Raumes eingesetzt zu werden. Dazu kann er mit seiner Rückseite R an einer hier nicht näher dargestellten Gebäudewand befestigt werden. Er umfasst drei Hauptbestandteile, die durch einen Basiskörper 20, einen elektrischen Heizwiderstand 40 und einen Klemmkörper 60 gebildet sind. Im fertig montierten Zustand ist der elektrische Heizwiderstand 40 ausschließlich kraftschlüssig am Basiskörper 20 befestigt, indem er durch den Klemmkörper 60 fest gegen den Basiskörper angedrückt wird (Figur 2).

Der Basiskörper 20 besteht hier aus einem stranggepressten Aluminiumprofil, dessen im wesentlichen rechteckiger Querschnitt in Figur 2 beispielhaft dargestellt ist. Es umfasst neben sieben geschlossenen Hohlkammern und zwei zur Rückseite R hin offenen Kammern eine Anlagefläche 22 für den Heizwiderstand 40, die gegenüber der Rückseite R in Richtung zur Vorderseite V hin in das Aluminiumprofil hinein versetzt ist. Bezüglich eines senkrecht zur Vorderseite V verlaufenden inneren Mittelstegs 24 ist der Basiskörper 20 achssymmetrisch ausgeführt, wobei auch die Anlagefläche 22 mittig bzw. achssymmetrisch zum Mittelsteg 24 liegt. Die Anlagefläche 22 ist somit an beiden Längsseiten jeweils von einem zur Rückseite R hin vorstehenden Profilbereich 26 umgeben. Dabei weist die Anlagefläche 22 gemäß der vorliegenden Erfindung ein zur Rückseite R hin leicht konvex gewölbtes Profil auf.

An der Rückseite R der beiden Profilbereiche 26 steht jeweils ein erster Steg 28 in Richtung des jeweils anderen Profilbereichs 26 vor, der innen durch einen um 90° abgewinkelten und hinter der Rückseite R nach hinten abstehenden längeren Steg 30 fortgesetzt ist. Insgesamt bilden die beiden Stege 28 und 30 dabei an den einander zugewandten Seiten der beiden Profilbereiche 26 jeweils einen L-förmigen Querschnitt aus.

Ausgehend von den in der Rückseite R des Basiskörpers 20 verlaufenden ersten Stegen 28 folgen in Richtung zur Anlagefläche 22 hin nach innen versetzt auf beiden Seiten jeweils zunächst ein zweiter Steg 32 und geringfügig oberhalb der Anlagefläche 22 noch ein dritter Steg 34. Auch diese Stege 32 und 34 erstrecken sich seitlich, parallel zur Rückseite R in Richtung zu dem jeweils anderen Profilbereich 26. Dabei ist der zweite Steg 32 schmaler als der erste Steg 28 und der dritte Steg 34 schmaler als der zweite Steg 32 ausgeführt.

Die einander zugewandten Stege 28 und 34 bilden jeweils einen ersten und zweiten Vorsprung aus, hinter denen jeweils eine Seitenkante des Klemmkörpers 60 festgeklemmt werden kann, um den Heizwiderstand 40 gegen die Anlagefläche 22 anzudrücken.

Der Klemmkörper 60 ist durch ein langgestrecktes Aluminiumblech gebildet, das eine gute Wärmeleitfähigkeit aufweist. Er umfasst einen flachen Drucksteg 62 und einen hiervon um 90° abgewinkelten flachen Haltesteg 64, so dass der Klemmkörper 60 insgesamt einen L-förmigen Querschnitt hat. Der Drucksteg 62 ist breiter ausgeführt als der Haltesteg 64, wobei er in Querrichtung leicht federelastisch biegbar ist. Der Drucksteg 62 bildet eine Andrückfläche, die im fertig montierten Zustand an dem elektrischen Heizwiderstand 40 anliegt.

Der Haltesteg 64 enthält eine Vielzahl von Querschlitzen 66, die quer zur Längserstreckung des Blechprofils orientiert sind und den Haltesteg 64 in eine Vielzahl von Haltezinken 68 unterteilen. Die freien Endkanten einerseits des Druckstegs 62 und andererseits des Haltestegs 64 bzw. der Haltezinken 68 hintergreifen im fertig montierten Zustand jeweils einen durch einen Steg 28 und 34 gebildeten Vorsprung.

Aufgrund der Unterteilung des Haltestegs 64 in die Vielzahl von Haltezinken 68 können diese nacheinander besonders leicht hinter den durch einen Steg 28 gebildeten Vorsprung gedrückt werden, nachdem zuvor die freie Endkante 70 des Druckstegs 62 auf der gegenüberliegenden Seite unter den Steg 34 platziert wurde. Beim Eindrücken der Haltezinken 68 hinter den durch den Steg 28 gebildeten Vorsprung wird der Druckstegs 62 entsprechend der konvexen Oberfläche der der Anlagefläche 22 gewölbt und baut dadurch die zum kraftschlüssigen Halten des Heizwiderstands 40 erforderliche Klemmkraft auf. Gleichzeitig bewirkt die so hervorgerufene Wölbung des Druckstegs 62, dass die von dem die Anlagefläche 22 seitlich überragenden Bereich des Druckstegs 62 rechtwinklig abstehenden Haltezinken 68 hinter den durch den Steg 28 gebildeten Vorsprung gedrückt werden, wo sie mit einem mittleren Bereich gegen die Rippe 32 des Basiskörpers 20 anschlagen. Da die freie Endkante des Druckstegs 62 auf der gegenüberliegenden Seite der Anlagefläche 22 gleichzeitig an einem unterhalb der Rippe 34 liegenden Profilwand des Basiskörpers 20 anliegen, kann eine unbeabsichtigte seitliche Verlagerung des Klemmkörpers 60 nicht erfolgen, so dass der Klemmkörper 60 und somit auch der elektrische Heizwiderstand 40 sicher an dem Basiskörpers 20 fixiert ist.

Der hier als selbstregelndes dynamisches PTC-Heizelement ausgeführte elektrische Heizwiderstand 40 ist in der Form eines flachen Streifens ausgebildet, dessen Länge zumindest im Wesentlichen der Länge des Basiskörpers 20 und des Klemmkörpers 60 entspricht. Er ist beidseitig von einer Kunststoffumhüllung umgeben, die ebenso wie der elektrische Heizwiderstand 40 selber aus einem elastischen, leicht mechanisch biegsamen Material besteht. Auf diese Weise kann sich der elektrische Heizwiderstand 40 mit der Kunststoffumhüllung flexibel verformen und leicht der durch die konvexe Anlagefläche 22 vorgegebenen Wölbung vollflächig anpassen.

Die Montage des elektrischen Heizkörper 10 läuft folgendermaßen ab:
- Zuerst wird der elektrische Heizwiderstand 40 auf die konvexe Anlagefläche 22 des Basiskörpers 20 aufgelegt,
- dann wird der Klemmkörper 60 angebracht, indem zunächst die freie Endkante 70 des Druckstegs 62 unter einen Steg 34 des Basiskörpers 20 gesteckt wird,
- nach dem Einstecken der Endkante 70 wird der Drucksteg 62 in Querrichtung über den auf der konvexen Anlagefläche 22 liegenden Heizwiderstand 40 gebogen und durch Einrasten der einzelnen Haltezinken 68 auf der gegenüberliegenden Seite hinter den Steg 28 fixiert.

Aufgrund der bei der Wölbung des Druckstegs 62 zur Anpassung an die konvexe Anlagefläche 22 erzeugten elastischen Spannung des im Querschnitt L-förmigen Klemmkörpers 60 halten die Haltezinken 68 gut von selbst hinter dem durch den Steg 28 gebildeten Vorsprung.

Im Ergebnis wird so eine perfekte, dauerhaft stabile Klemmung des Heizwiderstands 40 an dem Basiskörper 20 des elektrischen Heizkörpers 10 erzielt. Dabei werden weder stoffschlüssige Verbindungsmittel noch Schrauben benötigt. Außerdem wird die an der von der Anlagefläche 22 abgewandten Rückseite des Heizwiderstands 40 abgegebene Wärme über den aus Aluminium bestehenden Klemmkörper 60 an den Basiskörper 20 geleitet und steht somit ebenfalls zur gewünschten Beheizung des Raumes zur Verfügung.

## Patentansprüche

1. Elektrischer Heizkörper (10) für die Beheizung von Räumen, umfassend einen Basiskörper (20) und einen daran gehaltenen elektrischen Heizwiderstand (40), wobei mindestens ein Klemmkörper (60) formschlüssig an dem Basiskörper (20) gehalten ist, und wobei der Basiskörper (20) und/oder der Klemmkörper (60) eine konvex gewölbte Anlagefläche (22) aufweist, an welcher der elektrische Heizwiderstand (40) anliegt,
**dadurch gekennzeichnet,**
**dass** der elektrischen Heizwiderstand (40) durch mindestens einen Klemmkörper (60) gegen den Basiskörper (20) gedrückt ist und über seine gesamte Erstreckung an der Anlagefläche des Basiskörpers (20) anliegt und daran angedrückt gehalten wird, wobei die Anlagefläche des Basiskörpers (20) und/oder des Klemmkörpers (60) kraftschlüssig gegen den elektrischen Heizwiderstand (40) angedrückt ist.

2. Elektrischer Heizkörper (10) nach Anspruch 1, **dadurch gekennzeichnet, dass** der Basiskörper (20) mindestens einen ersten Vorsprung (34) aufweist, der von einem ersten Bereich (70) des Klemmkörpers (60) hintergriffen ist.

3. Elektrischer Heizkörper (10) nach Anspruch 2, **dadurch gekennzeichnet, dass** der Basiskörper (20) mindestens einen zweiten Vorsprung (28) aufweist, der von einem zweiten Bereich (64) des Klemmkörpers (60) hintergriffen ist.

4. Elektrischer Heizkörper (10) nach Anspruch 2 oder 3, **dadurch gekennzeichnet, dass** der Basiskörper (20) einen dritten Vorsprung (32) oder einen Anlagebereich aufweist, gegen den der Klemmkörper (60) anliegt.

5. Elektrischer Heizkörper (10) nach einem der vorherigen Ansprüche, **dadurch gekennzeichnet, dass** der Basiskörper (20) ein metallischer Profilkörper, insbesondere ein extrudiertes Aluminiumprofil ist.

6. Elektrischer Heizkörper (10) nach einem der vorherigen Ansprüche, **dadurch gekennzeichnet, dass** der Klemmkörper (60) durch ein Blech, insbesondere durch ein Aluminiumblech gebildet ist.

7. Elektrischer Heizkörper (10) nach Anspruch 6, **dadurch gekennzeichnet, dass** der Klemmkörper (60) durch einen Blechstreifen oder ein Blechprofil gebildet ist.

8. Elektrischer Heizkörper (10) nach Anspruch 6 oder 7, **dadurch gekennzeichnet, dass** der Klemmkörper (60) einen eine Andrückfläche umfassenden Drucksteg (62) und mindestens einen hiervon abgewinkelten Haltesteg (64) aufweist.

9. Elektrischer Heizkörper (10) nach Anspruch 8, **dadurch gekennzeichnet, dass** die Höhe des mindestens einen Haltestegs (64) geringer ist als die Breite des Druckstegs (62).

10. Elektrischer Heizkörper (10) nach Anspruch 8 oder 9, **dadurch gekennzeichnet, dass** der Haltesteg (64) mindestens einen Querschlitz aufweist, der den Haltesteg (64) in mindestens zwei Halteklappen unterteilt.

11. Elektrischer Heizkörper (10) nach Anspruch 8 oder9, **dadurch gekennzeichnet, dass** der Haltesteg (64) eine Mehrzahl von Querschlitzen (66) aufweist, die den Haltesteg (64) in eine Mehrzahl von Haltezinken (68) unterteilen.

12. Elektrischer Heizkörper (10) nach einem der vorherigen Ansprüche, **dadurch gekennzeichnet, dass** der Heizwiderstand (40) flach mit einer an den Basiskörper (20) angedrückten Kontaktfläche ausgebildet ist.

13. Elektrischer Heizkörper (10) nach Anspruch 12, **dadurch gekennzeichnet, dass** der Heizwiderstand (40) flexibel ist.

14. Elektrischer Heizkörper (10) nach Anspruch 12 oder 13, **dadurch gekennzeichnet, dass** der Heizwiderstand (40) von einem insbesondere flexiblen Kunststoffmantel umgeben ist.

## Claims

1. An electric radiator (10) for heating rooms, comprising a base body (20) and an electric heating resistor (40) held thereon, at least one clamping body (60) being held on the base body (20) in a form-locked manner, and the base body (20) and/or the clamping body (60) having a convexly curved bearing surface (22) against which the electric heating resistor (40) rests,
**characterized in that**
the electric heating resistor (40) is pressed by at least one clamping body (60) against the base body (20) and rests over its entire extension against the bearing surface of the base body (20) and is held pressed thereon, the bearing surface of the base body (20) and/or of the clamping body (60) being pressed against the electric heating resistor (40) in a force-fit manner.

2. The electric radiator (10) according to claim 1, **characterized in that** the base body (20) has at least one first protrusion (34), which a first region (70) of the clamping body (60) latchingly engages.

3. The electric radiator (10) according to claim 2, **characterized in that** the base body (20) has at least one second protrusion (28), which a second region (64) of the clamping body (60) latchingly engages.

4. The electric radiator (10) according to claim 2 or 3, **characterized in that** the base body (20) has a third protrusion (32) or a bearing region against which the clamping body (60) rests.

5. The electric radiator (10) according to any one of the preceding claims, **characterized in that** the base body (20) is a metallic profiled body, and in particular an extruded aluminum profile.

6. The electric radiator (10) according to any one of the preceding claims, **characterized in that** the clamping body (60) is a formed by a metal sheet, and in particular by an aluminum sheet.

7. The electric radiator (10) according to claim 6, **characterized in that** the clamping body (60) is a formed by a metal sheet strip or a profiled metal sheet.

8. The electric radiator (10) according to claim 6 or 7, **characterized in that** the clamping body (60) comprises a pressure ledge (62), having a pressing surface, and at least one retaining ledge (64) angled in relation thereto.

9. The electric radiator (10) according to claim 8, **characterized in that** the height of the at least one retaining ledge (64) is smaller than the width of the pressure ledge (62).

10. The electric radiator (10) according to claim 8 or 9, **characterized in that** the retaining ledge (64) has at least one transverse slot, which divides the retaining ledge (64) into at least two retaining flaps.

11. The electric radiator (10) according to claim 8 or 9, **characterized in that** the retaining ledge (64) has a plurality of transverse slots (66), which divide the retaining ledge (64) into a plurality of retaining prongs (68).

12. The electric radiator (10) according to any one of the preceding claims, **characterized in that** the heating resistor (40) is flat and has a contact surface that is pressed against the base body (20).

13. The electric radiator (10) according to claim 12, **characterized in that** the heating resistor (40) is flexible.

14. The electric radiator (10) according to claim 12 or 13, **characterized in that** the heating resistor (40) is surrounded by an in particular flexible plastic jacket.

## Revendications

1. Radiateur électrique (10) destiné au chauffage de pièces, comprenant un corps de base (20) et une résistance chauffante électrique (40) maintenue sur celui-ci, au moins un corps de serrage (60) étant maintenu sur le corps de base (20) d'une manière verrouillée en forme, et le corps de base (20) et/ou le corps de serrage (60) ayant une surface portante incurvée de manière convexe (22) contre laquelle repose la résistance chauffante électrique (40),
**caractérisée en ce que**
la résistance chauffante électrique (40) est pressée par au moins un corps de serrage (60) contre le corps de base (20) et repose sur son extension entière contre la surface portante du corps de base (20) et est maintenue pressée contre celui-ci, la surface portante du corps de base (20) et/ou du corps de serrage (60) étant pressée contre la résistance chauffante électrique (40) d'une manière à ajustement forcé.

2. Radiateur électrique (10) selon la revendication 1, **caractérisé en ce que** le corps de base (20) a au moins une première saillie (34), qu'engage par enclenchement une première région (70) du corps de serrage (60).

3. Radiateur électrique (10) selon la revendication 2, **caractérisé en ce que** le corps de base (20) a au moins une deuxième saillie (28), qu'engage par enclenchement une deuxième région (64) du corps de serrage (60).

4. Radiateur électrique (10) selon la revendication 2 ou 3, **caractérisé en ce que** le corps de base (20) a une troisième saillie (32) ou une région portante contre laquelle repose le corps de serrage (60).

5. Radiateur électrique (10) selon l'une quelconque des revendications précédentes, **caractérisé en ce que** le corps de base (20) est un corps profilé métallique, et en particulier un profilé en aluminium extrudé.

6. Radiateur électrique (10) selon l'une quelconque des revendications précédentes, **caractérisé en ce que** le corps de serrage (60) est formé par une tôle métallique, et en particulier par une tôle d'aluminium.

7. Radiateur électrique (10) selon la revendication 6, **caractérisé en ce que** le corps de serrage (60) est formé par une bande de tôle métallique ou une tôle métallique profilée.

8. Radiateur électrique (10) selon la revendication 6 ou 7, **caractérisé en ce que** le corps de serrage (60) comprend une traverse de pression (62), ayant une surface de pression, et au moins une traverse de rétention (64) formant un angle par rapport à celle-ci.

9. Radiateur électrique (10) selon la revendication 8, **caractérisé en ce que** la hauteur de l'au moins une traverse de rétention (64) est inférieure à la largeur de la traverse de pression (62).

10. Radiateur électrique (10) selon la revendication 8 ou 9, **caractérisé en ce que** la traverse de rétention (64) a au moins une fente transversale, qui divise la traverse de rétention (64) en au moins deux volets de rétention.

11. Radiateur électrique (10) selon la revendication 8 ou 9, **caractérisé en ce que** la traverse de rétention (64) a une pluralité de fentes transversales (66), qui divisent la traverse de rétention (64) en une pluralité de broches de rétention (68).

12. Radiateur électrique (10) selon l'une quelconque des revendications précédentes, **caractérisé en ce que** la résistance de chauffage (40) est plate et a une surface de contact qui est pressée contre le corps de base (20).

13. Radiateur électrique (10) selon la revendication 12, **caractérisé en ce que** la résistance chauffante (40) est souple.

14. Radiateur électrique (10) selon la revendication 12 ou 13, **caractérisé en ce que** la résistance chauffante (40) est entourée par une enveloppe en matière plastique en particulier souple.
